# EUROPÄISCHE PATENTANMELDUNG

(11) **EP 1 079 137 A1**
(43) Veröffentlichungstag der Anmeldung: **28.02.2001**
(21) Anmeldenummer: 00115196.8
(22) Anmeldetag: 13.07.2000
(51) Int. Cl.: F16D 69/02, F16D 65/12, C04B 35/565

(54) **Reibpaarung für Scheibenbremsen**

(30) Priorität: 26.08.1999 DE 19940569
(71) Anmelder: Dr.Ing. h.c.F. Porsche Aktiengesellschaft, 70435 Stuttgart (DE)
(72) Erfinder: Martin, Roland, 71287 Weissach (DE)

(57) **Zusammenfassung**

Die Erfindung betrifft eine Reibpaarung für Scheibenbremsen mit einer Bremsscheibe aus einem faserverstärktem Carbon-Siliziumkarbid-Werkstoff (C/C-SiC-Werkstoff). Erfindungsgemäß wird vorgeschlagen, für den Reibbelag einen Kupfer-Sinterwerkstoff mit einem Kupferanteil von mehr als 60 % zu verwenden.

## Beschreibung

Die Erfindung betrifft eine Reibpaarung für Scheibenbremsen mit einer Bremsscheibe aus einem faserverstärktem Carbon-Siliziumkarbid-Werkstoff (C/C-SiC-Werkstoff).

Aus der DE 197 27 586 A1 geht bereits ein Bremseinheit aus Bremsscheibe und Bremsbelag hervor, bei der eine Bremsscheibe C/SiC-Verbundkeramik mit einem Bremsbelag aus demselben Material kombiniert ist. Hierbei soll der C/C-Vorkörper des Bremsbelages wenigstens im oberflächennahen Bereich eine höhere Dichte als die des C/C-Vorkörpers der Bremsscheibe aufweisen. Vor allem auf Grund der hohen Oberflächenhärte der silizierten Reibpartner ist das Reibverhalten jedoch nicht befriedigend.

Ferner zeugt die DE 197 27 587 A1 eine Bremseinheit aus Bremsscheibe und Bremsbelag, bei der eine Bremsscheibe aus thermisch hoch belastbaren Material, vorzugsweise eine kurzfaserverstärkte C/SiC-Keramikbremsscheibe, mit einem Bremsbelag mit organisch gebundener Matrix kombiniert ist. Die Bremsscheibe ist dabei so ausgelegt, daß die Wärmeleitfähigkeit senkrecht zur Scheibenoberfläche mindestens 20 W/mK beträgt. Vorzugsweise soll die Wärmeleitfähigkeit im Bereich 30 bis 40 W/mK eingestellt werden. Durch die gute Wärmeleitfähigkeit können in Verbindung mit der Keramikbremsscheibe auch konventionelle, organisch gebundene Bremsbeläge eingesetzt werden. Die hierbei erzielten Standzeiten sind jedoch nicht befriedigend.

Schließlich ist aus der DE 197 27 585 A1 eine Bremseinheit aus Bremsscheibe und Bremsbelag bekannt geworden, bei der eine Bremsscheibe aus einem thermisch hochbelastbaren Material, vorzugsweise einem kurzfaserverstärkten C/SiC-Keramikmaterial, besteht. Der Bremsbelag besteht aus einem Sintermetall-Werkstoff oder einem anorganisch gebundenen Werkstoff mit keramischer Binderphase und Metallpartikeln. Der Sintermetall-Werkstoff soll aus folgenden Materialien bestehen:
- Kupfer/Kupferlegierung/Eisen/Eisenlegierungen in Form von Spänen, Wolle oder Pulver,
- Kohlenstoff/Koks/Graphit,
- SbS₃/MoS₂/CaF₂ als festes Schmiermittel, und
- Keramik/Aluminiumoxid/Glas/Glimmermehl/Schwerspat/Eisenoxid als Füllstoff.
Als Ausführungsbeispiel wird folgende Zusammensetzung angegeben:
- 5 bis 15 Gew.-% Polysiloxan H62C (Firma Wacker),
- 80 bis 90 Gew.-% Metall, aus 2/3 Stahlwolle und 1/3 Kupferpulver,
- 0,5 Gew.-% Al2O3 als Putzmittel, und
- < 5 Gew.-% MoS₂ oder CaS₂ oder Graphit

Gegenüber diesem Stand der Technik ist es Aufgabe der Erfindung, für eine Bremsscheibe aus C/C-SiC-Werkstoff einen bezüglich Reibverhalten und Standzeit verbesserten Sintermetall-Werkstoff für den Reibbelag zu schaffen.

Erfindungsgemäß wird diese Aufgabe mit den Merkmalen der unabhängigen Patentansprüche gelöst. Vorrichtungs- wie verwendungsgemäß wird vorgeschlagen, als Reibbelag einen Kupfer-Sinterwerkstoff mit einem Kupferanteil von mehr als 60 %, vorteilhafter Weise im wesentlichen in einem Bereich von 60% bis 70%, zu verwenden.

Diese Reibpaarung weist neben einem sehr konstanten Reibwert-Verhalten über einen weiten Geschwindigkeits- und Temperaturbereich auch ein sehr gutes Ansprechverhalten sowohl im kalten wie auch im warmen Zustand auf. Hervorzuheben sind darüber hinaus das gute Naßbremsverhalten, die hohe Resistenz gegen Korrosionseinflüsse und schließlich auch das sehr gute wärmedynamische Verhalten, d.h. eine hohe Abkühlgeschwindigkeit.

Zusätzlich können Beimischungen von Graphit, Ferrochrom oder Eisen eingesetzt werden. Als Bindemittel können Kupfer, Zink und Silber oder Mischungen hieraus verwendet werden.

Ein derartiger Reibbelag kann durch Variation der Zusammensetzung hinsichtlich seiner Eigenschaften Wärmeleitung, Reibverhalten über der Temperatur, Verschleiß und Kompressionsverhalten auf den Werkstoff der Bremsscheibe abgestimmt werden. Von besonderem Vorteil ist es hierbei, daß das Verschleißverhalten so einstellbar ist, daß eine Lebensdauer von Reibbelag und Bremsscheibe entsprechend einer Fahrleistung bei Pkw von 100.000 km oder mehr erreichbar ist.

Die Bremsscheibe aus einem faserverstärktem Carbon-Siliziumkarbid-Werkstoff (C/C-SiC-Werkstoff) besteht in an sich bekannter Weise aus einem Formkörper aus kohlenstoffaserverstärkten Kohlenstoff (sog. Grünling), der mit flüssigem Silizium infiltriert und einer Wärmbehandlung unterworfen wird. Hierbei wandelt sich das Silizium mit Kohlenstoff zu SiC um.

## Patentansprüche

1. Bremssystem, bestehend aus einer Bremsscheibe aus C/C-SiC-Werkstoff und einem Reibbelag aus Sintermetall-Werkstoff, **dadurch gekennzeichnet**, daß der Reibbelag aus einem Kupfer-Sinterwerkstoff mit einem Kupferanteil von mehr als 60% besteht.

2. Bremssystem nach Anspruch 1, **dadurch gekennzeichnet**, daß der Kupferanteil im Reibbelag im wesentlichen im Bereich von 60% bis 70% liegt.

3. Bremssystem nach Anspruch 1 oder 2, **dadurch gekennzeichnet**, daß der Reibbelag eine oder mehrere Beimischungen aus der Gruppe der Werkstoffe: Graphit, Ferrochrom und Eisen aufweist.

4. Verwendung eines Reibbelages für eine Bremsscheibe aus C/C-SiC-Werkstoff, wobei der Reibbelag aus einem Kupfer-Sinterwerkstoff mit einem Kupferanteil von mehr als 60% besteht.

5. Verwendung nach Anspruch 4, **dadurch gekennzeichnet**, daß der Kupferanteil im wesentlichen im Bereich von 60% bis 70% liegt.

6. Verwendung nach Anspruch 4 oder 5, **dadurch gekennzeichnet**, daß der Reibbelag eine oder mehrere Beimischungen aus der Gruppe der Werkstoffe: Graphit, Ferrochrom und Eisen aufweist.
